# EUROPÄISCHE PATENTANMELDUNG

(11) **EP 2 927 664 A1**
(43) Veröffentlichungstag der Anmeldung: **07.10.2015**
(21) Anmeldenummer: 14075020.9
(22) Anmeldetag: 04.04.2014
(51) Int. Cl.: G01N 1/31, G01N 1/36, A61B 10/00, G01N 33/483

(54) **Vorrichtung zur gleichzeitigen Präparation einer Mehrzahl von Frischgewebeschnitten sowie ein Durchführungsverfahren**

(71) Anmelder: Popa, Aurel, 18055 Rostock (DE); Schulte, Gerd, 17109 Demmin (DE); Reck, Valentin, 76356 Weingarten (DE)
(72) Erfinder: Popa, Aurel, 18055 Rostock (DE)
(74) Vertreter: Kietzmann, Manfred

(57) **Zusammenfassung**

Die Erfindung betrifft eine Vorrichtung zur gleichzeitigen Präparation einer Mehrzahl von Frischgewebeschnitten aufweisend einen Reaktor (1) mit einer mit einem Deckel (2) druckdicht verschließbaren Reaktionskammer (3) und mindestens einer Zulaufleitung (4) und mindestens einer Ablaufleitung (5) für Präparationslösungen, wobei die Reaktionskammer (3) luftblasenfrei mit einer Präparationslösung befüllbar ist, eine Mehrzahl stapelbarer Probenträger (6), die in die Reaktionskammer (3) passförmig einsetzbar sind, wobei jeder Probenträger (6) für die Aufnahme mindestens eines jeweils auf einem netzartigen Gewebe (7) aufgetragenen Frischgewebeschnittes (8) hergerichtet ist und wobei jeder Probenträger (6) eine Bodenplatte (9) mit Durchgangsöffnungen (10) sowie eine die Bodenplatte (9) überragende Seitenwandung (11) mit Durchgangskanälen (12) für den Durchtritt der Präparationslösungen aufweist,
sowie eine Pumpe (13) zur Erzeugung einer Fluidströmung in der Reaktionskammer (3), bei der der Reaktor (1) um 90° schwenkbar gelagert ist, so dass die Reaktionskammer (3) von einer vertikalen Ausrichtung (14) in eine horizontale Ausrichtung (15) und umgekehrt verschwenkbar ist sowie ein vorrichtungsseitiges Verfahren.

## Beschreibung

Die Erfindung betrifft eine Vorrichtung und ein Verfahren zur gleichzeitigen Präparation einer Mehrzahl von Frischgewebeschnitten.

Insbesondere betrifft die Erfindung eine automatisierte Vorrichtung zur Highthrough immunhistochemischen und Genexpressions-Analyse von Frischgewebe für die Forschung und Diagnostik.

Die Beurteilung von krankhaft verändertem Gewebe ist die Hauptaufgabe der Pathologie. Die Befunde mit der höchsten diagnostischen Wertigkeit werden dabei durch die Untersuchung unter dem Mikroskop erhoben. Auch unter Berücksichtigung des makroskopischen Befundes werden die Diagnosen in der heutigen Molekularmedizin durch Zusatzuntersuchungen, wie Immunhistologie und Molekularpathologie abgesichert oder präzisiert. Genexpressionsanalyse sowie Immunhistologie sind für die Gewinnung neuer wissenschaftlicher Erkenntnisse über Auslöser und Verlauf einer Krankheit unentbehrlich und stellen in diesem Sinne eine wesentliche Ergänzungsmethode für die Diagnostik dar. Mit ihr lassen sich gezielt bestimmte Proteine (Eiweiße) durch Antikörper in Zellen fluoreszierend darstellen.

Die herkömmlichen Analysegeräte arbeiten gewöhnlicher Weise mit vorbehandeltem Gewebe, welches üblicherweise über 24 Stunden in Paraffin unter Verwendung gesundheitsschädlicher Lösungsmittel wie Xylol konserviert wurde. Bei dieser Vorbehandlung gehen die meisten Informationen über Nukleinsäuren sowie zum Teil die Nachweisbarkeit der Eiweiße verloren. Nachteilig ist auch, dass die Gewebeschnitte an Glasobjekträger geklebt werden, was das Durchdringungsvermögen der Detektionsreagenzien reduziert. Insgesamt dauert der Prozess von Probenentnahme bis zum Ergebnis in der Regel 48 bis 52 Stunden. Darüber hinaus sind die bekannten Geräte für die Färbung von frei schwimmenden Gewebedünnschnitten ("free floating") nicht geeignet, obgleich die Methodik der Färbung von frei schwimmenden Gewebedünnschnitten in der Forschung vorwiegend eingesetzt wird.

Um die Nachteile der Paraffineinbettung zu vermeiden und die Analyse sowohl von Nukleinsäuren als auch von Eiweißen zu ermöglichen, wird sogenanntes Frischgewebe eingesetzt, wobei bei manuelle Bearbeitung die Anzahl der Proben sehr gering ist (max. 10) und die Prozedur ebenfalls 48 bis 52 Stunden dauert.

Die Nachteile der gegenwärtig eingesetzten Methoden wirken sich in der Forschung und Diagnostik, in der eine große Anzahl Proben zu bearbeiten ist, äußerst negativ aus, da die Präparationszeit von bis zu 52 Stunden keine schnelle medizinische Reaktion auf das mögliche Krankheitsbild eines Patienten erlaubt. So ist beispielsweise bei Schlaganfallspatienten möglichst zeitnah nach einem Schlaganfall mit der Therapie zu beginnen, um die Heilungschancen zu erhöhen.

Aus dem Stand der Technik sind bereits Apparate zur Präparation von Gewebeproben oder Gewebeschnitten bekannt, die die Präparationszeit verkürzen und die Durchführung der Präparationsverfahren für den Ausführenden sicherer machen.

Die DE 101 49 345 B4 offenbart eine Einbettvorrichtung zur schnellen Gewebepräparation für histologische Untersuchungen, bei dem mehrere Behandlungstationen kreisförmig angeordnet sind, in denen sich Flüssigkeiten für die Behandlung der Gewebeproben befinden. Über eine Führungsstange mit einer Objekthalter tragenden Drehscheibe werden die Gewebeproben von Behälter zu Behälter geführt und jeweils in diesen für den Kontakt mit der Behandlungsflüssigkeit abgesenkt.

In der DE 691 17 227 T2 ist ein Apparat in Form eines Arbeitsbehälters zur Präparation von Gewebeproben für zur histologischen Untersuchung offenbart, in den eine Mehrzahl stapelbarer Kassette mit Gewebeproben eingesetzt werden, die in einem Stapelrahmen eingespannt sind. Eine Kassette besteht aus einer Bodenplatte sowie Seitenwänden, die Öffnungen bzw. Schlitze zum Durchtritt von Fluid durch die Kassette aufweisen. Das Umspülen der Gewebeproben mit Behandlungsmedien erfolgt durch vertikale Rotation des Behälters oder mittels kontinuierlicher Passage.

Ein Behandlungsreaktor mit Aufnahmerohren für senkrecht übereinander angeordnete und stapelbare Objekträger mit einem netzartigen Boden, die die Gewebeproben tragen, ist in der DE 30 42 578 A1 beschrieben. Der Reaktor ist derart mit der Behandlungsflüssigkeit befüllt, dass die Behandlungsflüssigkeit oberhalb der Aufnahmerohre einen Überstand mit Luftkammer bildet. Das Durchspülen der Objekträger mit der im Reaktor befindlichen Behandlungsflüssigkeit erfolgt mit einer axial fördernden Schnecke, die im Reaktor eingerichtet ist und die die Behandlungsflüssigkeit umwälzt.

Aus der EP 0 969 277 B1 ist eine Vorrichtung zur Behandlung und Infiltration von histologischen Proben (Paraffineinbettung) bekannt, bei der auf einer waagerechten Drehachse Behälter eingerichtet sind, in die Kassetten mit Gewebeproben eingesetzt sind. Bei der Drehung werden die Behälter abwechselnd in die Behandlungsflüssigkeit eingetaucht und wieder herausgenommen, wodurch die Behandlung der Proben mit der Behandlungsflüssigkeit erfolgt.

Alle vorstehend genannte Apparate beziehen sich jedoch auf die Automatisierung und Verarbeitung einer größeren Anzahl von Gewebeproben bezüglich der Fixierung des Gewebes durch Paraffineinbettung.

Wie vorab bereits erläutert, gehen allerdings bei der Paraffineinbettung die meisten Informationen über Nukleinsäuren sowie zum Teil die Nachweisbarkeit der Eiweiße verloren.

Darüber hinaus kann ein Großteil enzymhistochemischer, zytologischer und immunologischer Untersuchungsmethoden nur an Gewebeproben vorgenommen werden, die unfixiert sind.

Die Untersuchung von Frischgwebe ermöglicht zudem den Einsatz einer wesentlich breiteren Palette von Nachweismolekülen wie Antikörpern oder diagnostischen Enzymen als sie für fixierte Gewebe zur Verfügung stehen, so dass die Diagnostik an Frischgewebeschnitten ein weitaus größeres Gebiet abdecken kann als bei Verwendung von eingebetteten Gewebeproben.

Aufgabe ist es daher, eine Vorrichtung und ein vorrichtungsseitiges Verfahren anzugeben, mit denen es möglich ist, eine große Anzahl von Frischgewebeschnitten einer präparativen Behandlungsmethode zu unterziehen, die für den Nutzer sicher und bequem und zudem in kürzester Zeit durchgeführt werden kann.

Die Aufgabe wird mit einer Vorrichtung zur gleichzeitigen Präparation einer Mehrzahl von Frischgewebeschnitten gelöst, die einen Reaktor mit einer mit einem Deckel verschließbaren Reaktionskammer und mit mindestens einer Zulaufleitung und mindestens einer Ablaufleitung für Präparationslösungen aufweist, wobei die Reaktionskammer luftblasenfrei mit einer Präparationslösung füllbar ist. In die Reaktionskammer ist eine Mehrzahl stapelbarer Probenträger passförmig einsetzbar, wobei jeder Probenträger für die Aufnahme mindestens eines jeweils auf einem netzartigen Gewebe aufgetragenen Frischgewebeschnittes hergerichtet ist. Jeder Probenträger weist eine Bodenplatte mit Durchgangsöffnungen sowie eine die Bodenplatte überragende Seitenwandung mit Durchgangskanälen für den Durchtritt der Präparationslösungen auf.

Die in der Bodenplatte des Probenträgers eingerichteten Durchgangsöffnungen sind vorzugsweise zylinderförmige Bohrungen, die senkrecht durch die Bodenplatte geführt sind. Die Durchgangskanäle in der Seitenwandung des Probenträgers sind vorzugsweise radial zueinander ausgerichtet.

Zur Förderung der Präparationslösung und zur Erzeugung einer Fluidströmung in der Reaktionskammer ist mindestens eine Pumpe eingerichtet.

Die erfindungsgemäße Vorrichtung zeichnet sich dadurch aus, dass der Reaktor um 90° schwenkbar gelagert ist, so dass die Reaktionskammer von einer vertikalen Ausrichtung in eine horizontale Ausrichtung und umgekehrt verschwenkbar ist.

Im Gegensatz zu bekannten Vorrichtungen wird bei der vorliegenden Vorrichtung der Reaktor während der Präparation von Gewebeschnitten nicht in einer dauerhaften Schwenk- oder Rotationsbewegung gehalten, sondern nur zur Durchführung bestimmter Verfahrenshandlungen von der einen stationären Ausrichtung in die andere stationäre Ausrichtung verschwenkt.

Mit der erfindungsgemäßen Vorrichtung werden die bekannten Nachteile der Gewebeanalyse gelöst und sowohl eine Genexpression als auch eine Proteomanalyse von bis zu 500 Proben in einem schnellen Durchlauf (Hightrough Methodik) ermöglicht.

Da mit der erfindungsgemäßen Vorrichtung eine Vielzahl von Präparationsmethoden/Präparationsverfahren wie Färbemethoden (Zellfärbeverfahren, Immunfärbung, Zelldivisionsfärbung etc.), enzymatische Nachweisreaktionen, immunologische Nachweisreaktionen, Proteinanalysen oder DNA-/RNA-Analysen etc. durchgeführt werden können, bezeichnet der Begriff "Präparationslösung" allgemein jedwede während der Durchführung einer solchen Methode eingesetzte Lösung oder Flüssigkeit. Eine Präparationslösung kann somit je nach durchzuführenden Präparationsverfahren oder Präparationsschritt eine Spülösungen beispielsweise ein Puffer, eine Färbemittel haltige Lösung, eine Enzymlösung, eine Antikörper haltige Lösung, eine Reaktionsreagenz oder Fixierungsreagenz bezeichnen. Die Aufzählung ist nicht abschließend, da je nach durchzuführender Präparationsmethode unterschiedliche Präparationslösungen verschiedenster Zusammensetzung zum Einsatz kommen können.

Bei der in der Reaktionskammer erzeugten Fluidströmung handelt es sich insbesondere um eine turbulente Fluidströmung, mit der die auf dem Probenträger befindlichen Frischgewebeschnitte umspült werden, wobei die Präparationslösung den Probenträger über die Durchgangsöffnungen in der Bodenplatte und über die Durchgangskanäle in der Seitenwandung durchströmt. Turbulente Strömungsbedingungen erhöhen den Stoffaustausch mit dem Frischgewebeschnitt sowie die Durchmischung der Präparationslösung.

In einer bevorzugten Ausführungsform ist die erfindungsgemäße Vorrichtung mit einer Steuereinheit zur Automatisierung eines mit der Vorrichtung durchführbaren Präparationsverfahrens ausgestattet, in der ein oder mehrere Programme für die Durchführung von Präparationsverfahren abrufbar gespeichert sind. Zudem ist die Steuereinheit mit den vorrichtungsseitig eingerichteten Bauteilen wie Reaktor, Pumpen, Ventile, Durchflussreglern, Temperierelemente oder Motoren etc. über Signalleitungen verbunden und die Steuer- und Regelung der vorrichtungsseitig eingerichteten Bauteile erfolgt anhand eines für das jeweilig durchzuführende Präparationsverfahren erstellten und in der Steuereinheit hinterlegten Durchführungsprotokolls.

Die Bedienung der erfindungsgemäßen Vorrichtung und/oder die Eingabe von Steuerbefehlen können über ein Bedienpaneel, vorzugsweise mit einer Anzeige zur Darstellung verfahrensspezifischer Parameter, erfolgen.

Vor der Gewebepräparation werden die auf einem netzartigen Gewebe aufgetragenen Gewebeschnitte in die Probenträger eingesetzt. Vorzugsweise überdeckt das netzartige Gewebe passförmig die Bodenplatte des Probenträgers, wobei sich das netzartige Gewebe zwischen Bodenplatte und Frischgewebeschnitt befindet und eine flüssigkeitsdurchlässige, insbesondere eine. Von einem Fluid durchströmbare Struktur aufweist.

Zur Bearbeitung einer größeren Anzahl von Frischgewebeschnitten kann der Probenträger für die Aufnahme mehrerer auf einem netzartigen Gewebe aufgebrachter Frischgewebeschnitte hergerichtet sein, wobei die jeweils auf einem netzartigen Gewebe aufgebrachten Frischgewebeschnitte übereinander geschichtet in den Probenträger einsetzbar sind, so dass die geschichteten Frischgewebeschnitte eine SandwichStruktur bilden, die oberseitige mit der Unterseite des darüber befindlichen Probenträgers abgeschlossen wird.

In einer bevorzugten Ausgestaltung ist zwischen der Bodenplatte des Probenträgers und dem darüber liegenden netzartigen Gewebe ein Abstandshalter mit Durchströmöffnungen eingerichtet, der einen geringeren Strömungswiderstand als das netzartige Gewebe besitzt. Ein derartiger Abstandshalter kann ebenfalls aus einem netzartigen Material gefertigt sein, wobei dieses eine größere Maschenweite bzw. Porengröße besitzt als das netzartige Gewebe. Durch diesen Aufbau wird eine gleichmäßige Druck- und Flüssigkeitsverteilung zwischen Bodenplatte und netzartigem Gewebes und dem darauf befindlichen Frischgewebeschnitt erreicht.

Durch die bevorzugte Lagenschichtung in der Reihenfolge "Bodenplatte, Abstandshalter und darauf aufliegend ein oder mehrere netzartige Gewebe mit den Frischgewebeschnitten" wird im Vergleich zu bloßen Siebträgern ein gleichmäßigeres Präparationsbild erzielt.

Die Reaktionskammer weist vorzugsweise die Form eines schachtartigen rohrförmigen Behälters auf, der in den Reaktor eingelassen ist und dessen Öffnung mit dem Deckel verschließbar ist. In einer bevorzugten Ausführungsform ist die Reaktionskammer ein zylinderförmiger Behälter.

Der Reaktor ist in einer bevorzugten Ausgestaltung zusätzlich mit einem oder mehreren Temperierelementen ausgestattet, mittels derer die Reaktionskammer auf eine definierte Temperatur aufgeheizt oder abgekühlt werden kann, um bei jedem Präparationsschritt die optimale Reaktionstemperatur einstellen zu können.

Die mit Frischgewebe beladenen Probenträger werden übereinander gestapelt in die Reaktionskammer eingesetzt, wobei die Probenträger direkt aufeinander aufliegen, so dass die Bodenplatte des obenliegenden Probenträgers in den darunterliegenden Probenträger eingreift und diesen dadurch abdeckt.

Die Probenträger sind passförmig zum Querschnitt der Reaktionskammer ausgebildet, so dass diese wandnah zur Reaktionskammerwand einsetzbar sind, insbesondere derart, dass im eingesetzten Zustand zwischen der Außenwand des Probenträgerstapels und der Innenwand der Reaktionskammer ein schmaler ringförmiger Spalt erhalten bleibt, der die Zirkulation der Präparationslösung innerhalb der Reaktionskammer und zwischen den Probenträgern ermöglicht.

Für das Bestücken der Reaktionskammer mit den Probenträgern sowie bei jedem Verfahrensschritt, bei dem eine Präparationslösung in die Reaktionskammer eingefüllt oder aus dieser ausgelassen wird, ist der Reaktor mit der darin eingerichtete Reaktionskammer vertikal ausgerichtet.

In der der Öffnung der Reaktionskammer gegenüberliegenden Wandung ist, vorzugsweise zentrisch, eine Zulaufleitung eingerichtet, über die die Reaktionskammer mit einer Präparationslösung befüllt wird oder über die der Fluidstrom in die Reaktionskammer einströmt. Die Wandung bildet in vertikaler Ausrichtung den Boden der Reaktionskammer.

Die Probenträger werden in die Reaktionskammer mit der Unterseite der Bodenplatte in Richtung dieser Wandung/Boden eingesetzt, so dass der Probenträger mit der Bodenplatte in Richtung der Zulaufleitung weist. Hierdurch wird erreicht, dass der erste Probenträger von der Unterseite der Bodenplatte, zumindest in Teilbereichen orthogonal, angeströmt wird.

Nach dem Bestücken der Reaktionskammer mit den Probenträgern wird dieser mittels des Deckels verschlossen, der vorzugsweise druck- und/oder flüssigkeitsdicht ausgebildet ist.

Die beschriebene Zulaufleitung kann auch für das Ablassen der Präparationslösung aus der Reaktionskammer hergerichtet sein. Alternativ kann zusätzlich eine Ablassleitung im Bereich der Wandung bzw. des Bodens der Reaktionskammer eingerichtet sein.

Die Reaktionskammer weist zudem eine Ablaufleitung für den Austritt der Präparationslösung aus der Reaktionskammer auf. Vorzugsweise ist die Ablaufleitung in dem Punkt eingerichtet, der bei vertikaler Ausrichtung der Reaktionskammer den höchsten Punkt bildet. Vorzugsweise ist die Ablaufleitung durch den Deckel geführt.

In der Ablaufleitung kann ein Verschlussmechanismus wie beispielsweise ein Absperrventil vorhanden sein, der während des Befüllens der Reaktionskammer zu dessen Entlüftung geöffnet ist.

Um den Zeitpunkt des Austritts der Präparationslösung aus dem Reaktor auch visuell verfolgen zu können, kann die Ablaufleitung aus einem durchsichtigen Schlauchmaterial gefertigt sein. Die Detektion, ob in der Reaktionskammer Luftblasen vorhanden sind, kann ebenso sensorisch erfolgen. Der Befüllungsvorgang wird beendet, sobald die Präparationslösung luftblasenfrei über die Ablaufleitung aus der Reaktionskammer austritt.

Nachdem die mit Probenträgern bestückte Reaktionskammer luftblasenfrei mit einer Präparationslösung gefüllt ist, wird der Reaktor um circa 90° von der vertikalen Ausrichtung in die horizontale Ausrichtung verschwenkt.

Vorzugsweise ist die schwenkbewegliche Lagerung des Reaktors eine horizontal ausgerichtete, insbesondere motorisch antreibbare Drehachse, an deren einem Ende der Reaktor befestigt ist. Auch kann der Reaktor mittels eines insbesondere motorisch antreibbaren Drehgelenks schwenkbeweglich gelagert sein.

Während der Durchführung eines Präparationsschrittes wird der Reaktor stationär in der vertikalen Ausrichtung gehalten. Zur Umspülung der in der Reaktionskammer befindlichen Frischgewebeschnitte mit einer Präparationslösung wird diese mittels einer Pumpe in eine Fluidströmung versetzt, so dass die Probenträger kontinuierlich von der Präparationslösung durchströmt bzw. von dieser überströmt werden.

Der erfindungsgemäße Aufbau der Probenträger bedingt, dass die darin angeordneten Frischgewebeschnitte über die bodenseitigen Durchgangsöffnungen im Wesentlichen orthogonal angeströmt und aufgrund der seitlichen Durchgangskanälen quer zur deren Schnittfläche überströmt werden. Zusätzlich ermöglichen die bodenseitigen Durchgangsöffnungen einen Durchtritt der Präparationslösung von einem Probenträger zum benachbarten Probenträger.

In einer besonderen Ausführungsform ist seitlich am Reaktor mindestens eine aus der Reaktionskammer herausführende Zirkulationsleitung eingerichtet, die mit einer Zulaufleitung, die in die Reaktionskammer hinein führt, verbunden ist, so dass während der Durchführung eines Präparationsschrittes die Präparationslösung in einem Kreislauf zirkulierend durch die Reaktionskammer geführt wird.

Zur zirkulären Förderung der Präparationslösung ist in der Zulaufleitung und/oder in der Zirkulationsleitung mindestens eine Förderpumpe eingerichtet. Bei dieser Ausführungsform ist die Ablaufleitung vorteilhafterweise geschlossen, während die Zirkulation der Präparationslösung über die Zirkulationsleitung durchgeführt wird.

Durch die Einrichtung einer Zirkulationsleitung wird erreicht, dass ein zirkulärer Fluidstrom erzeugt wird, indem die Präparationslösung über die Zirkulationsleitung aus der Reaktionskammer herausgeführt und über die Zulaufleitung wieder in die Reaktionskammer rückgeführt wird, so dass eine in axialer Richtung der Reaktionskammer verlaufende Grundströmungsrichtung induziert wird. Hierdurch werden neben einer verbesserten Durchmischung und effektiveren Nutzung der Präparationslösung eine gleichmäßige Durchdringung der Frischgewebeschnitte mit der Präparationslösung sowie eine einheitliche Präparierung aller Frischgewebeschnitte erzielt.

Die Zirkulationsleitung ist vorteilhafterweise an der Seite des Reaktors eingerichtet, die bei vertikaler Ausrichtung der Reaktionskammer nach unten weist, so dass in dieser Position die Zirkulationsleitung unterseitig aus der Reaktionskammer herausführt. Gleiches gilt bei Einrichtung mehrerer Zirkulationsleitungen.

Vorteilhafterweise sind bei Einrichtung mehrerer Zirkulationsleitungen diese über die Länge der Reaktionskammer gleichmäßig zueinander beabstandet angeordnet, insbesondere in linearer Reihe parallel zur Längsachse der Reaktionskammer.

In einer besonderen Ausgestaltungsform kann in einer Zirkulationsleitung ein Durchflussregler eingerichtet sein, mittels dessen entweder die Größe des Volumenstroms der aus der Reaktionskammer abfließenden Präparationslösung eingestellt oder die Zirkulationsleitung für den Durchfluss der Präparationslösung geöffnet oder verschlossen werden kann.

Sind mehrere Zirkulationsleitungen eingerichtet, die vorteilhafterweise jeweils mit einem Durchflussregler ausgestattet sind, können während der Zirkulation der Präparationslösung die Zirkulationsleitungen alternierend (in abwechselnder Reihenfolge) über den jeweilige Durchflussregler geschlossen und geöffnet werden, wobei mindestens eine der Zirkulationsleitungen geöffnet ist, während die weiteren Zirkulationsleitungen geschlossen sind. Das Öffnen und Schließen des jeweiligen Durchflussreglers kann gleichmäßig getaktet oder arrhythmisch erfolgen.

Alternativ zum Schließen und Öffnen einer Zirkulationsleitung kann die jeweilige Größe des Volumenstroms, der durch eine Zirkulationsleitung aus der Reaktionskammer abgeleitet wird, im zeitlichen Verlauf eines Präparationsschrittes mittels des zugehörigen Durchflussreglers erhöht oder gemindert werden. Bei mehreren Zirkulationsleitungen erfolgt die Regelung des Gesamtvolumenstroms, indem der Durchfluss in einer Zirkulationsleitung erhöht wird, während zeitgleich in einer oder mehreren weiteren Zirkulationsleitungen der Durchfluss gemindert wird. Ist Bedingung des Präparationsschrittes, dass dieser bei konstanten Druck durchzuführen ist, so ist die Summe der aus der Reaktionskammer abgehenden Teilvolumenströme der Zirkulationsleitungen gleich dem in die Reaktionskammer führenden Zulaufstrom.

Die vorgenannten Ausführungsformen bedingen eine zeitliche Veränderung der Strömungszustände wie Umkehr der Strömungsrichtung oder Änderung der lokalen Strömungsgeschwindigkeit in den einzelnen Sektoren der Reaktionskammer während eines Präparationsschrittes.

Vorteilhafterweise ist die Vorrichtung mit einem Mittel zur Erzeugung eines Überdrucks in der Reaktionskammer wie beispielsweise einer Druckpumpe oder einem Kompressor sowie ggfls. mit einem Druckregelungsventil ausgestattet, so dass ein einzelner, mehrere oder auch alle durchzuführenden Präparationsschritte eines Präparationsverfahrens unter Überdruckbedingungen durchgeführt werden können, wodurch die Effektivität des Präparationsverfahrens erhöht und gleichzeitig die Dauer des Präparationsverfahrens verkürzt wird.

Für die Durchführung von Präparationsverfahren unter Überdruckbedingungen ist der Reaktor vorzugsweise ein Druckbehälter.

Zur Lösung der eingangs genannten Aufgabe wird zudem ein Verfahren zur gleichzeitigen Präparation einer Mehrzahl von Frischgewebeschnitten mit der erfindungsgemäßen Vorrichtung angegeben.

Das erfindungsgemäße Verfahren betrifft ein vorrichtungsseitiges Verfahren mit mindestens den Verfahrensschritten
- luftblasenfreies Befüllen der mit gestapelten Probenträgern bestückten Reaktionskammer mit einer Präparationslösung,
- Durchführen eines Präparationsschrittes eines Präparationsverfahrens und
- Entfernen der Präparationslösung aus der Reaktionskammer.

Das erfindungsgemäße Verfahren zeichnet sich dadurch aus, dass die mit gestapelten Probenträger bestückte Reaktionskammer zum luftblasenfreien Befüllen der Reaktionskammer mit einer Präparationslösung sowie zur Entfernung der Präparationslösung aus der Reaktionskammer in eine vertikale Ausrichtung und für die Durchführung eines Präparationsschrittes in eine horizontale Ausrichtung verbracht wird.

Die vertikale Ausrichtung der Reaktionskammer während des Befüllens mit einer Präparationslösung stellt sicher, dass die Reaktionskammer luftblasenfrei mit der Präparationslösung gefüllt wird. Beim Befüllen der Reaktionskammer durch die in deren Boden eingerichtete Zulaufleitung steigt die Präparationsflüssigkeit kontinuierlich nach oben und drückt dabei die in der Reaktionskammer befindliche Luft über die abgehende Ablaufleitung vollständig aus der Reaktionskammer heraus. Sobald die Reaktionskammer luftblasenfrei gefüllt ist, wird die Reaktionskammer um circa 90° in die horizontale Ausrichtung verschwenkt.

Während der Durchführung eines Präparationsschrittes wird die Reaktionskammer vom Zulauf in Richtung Ablauf mit einer Präparationslösung unter Ausbildung einer in axialer Richtung Grundströmung mit oder ohne Zirkulation durchspült, wobei die erfindungsgemäße Geometrie der Probenträger (Durchströmen der Durchgangsöffnungen und Durchgangskanäle) die Strömungsumlenkung und die daraus resultierende Turbulenzbildung bedingt.

Zum Ablassen der Präparationslösung aus der Reaktionskammer nach Beendigung eines Präparationsschrittes oder -verfahrens wird die Reaktionskammer zurück in die vertikale Ausrichtung verschwenkt. Das Ablassen oder Abpumpen der Präparationslösung erfolgt über eine bodenseitig eingerichtete Auslassleitung, vorzugsweise über die dortige Zulaufleitung.

Die Effektivität eines Präparationsverfahrens wird zusätzlich erhöht, wenn die Präparation der Frischgewebeschnitte unter Überdruckbedingungen in der Reaktionskammer durchgeführt wird, vorzugsweise mit einem Überdruck von 0,1 bar bis 1 bar. Die Höhe des zu wählenden Überdrucks ist direkt abhängig von der Herkunft und Dicke des Frischgewebeschnittes sowie vom durchzuführenden Präparationsschritt bzw. Präparationsverfahren.

Mittels der erfindungsgemäßen Vorrichtung bzw. mittels des erfindungsgemäßen Verfahrens kann eine Verkürzung der Präparationsdauer von 30 % und mehr erreicht werden. Nachstehend wird die Erfindung anhand der Figuren näher erläutert.

Die Figuren zeigen
- Fig. 1:: Querschnittsansicht des mit stapelbaren Probenträgern bestückten Reaktors,
- Fig. 2:: Querschnittsansicht und Aufsicht des Probenträgers,
- Fig. 3:: Front- und Seitenansicht der erfindungsgemäßen Vorrichtung,
- Fig. 4:: Fließbild der Vorrichtung
- Fig. 5:: Abbildungen präparierter Frischgewebeschnitte, Vergleich zur herkömmlichen Präparation

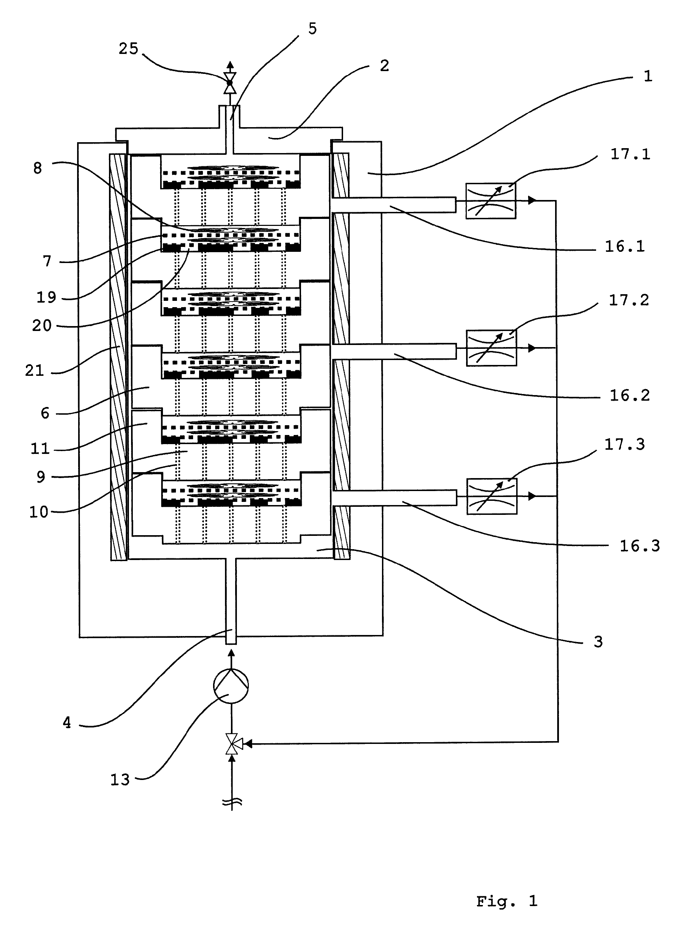

Die Figur 1 zeigt eine Querschnittsansicht des mit stapelbaren Probenträgern 6 bestückten Reaktors 1.

Die Reaktionskammer 3 weist die Form eines zylinderförmigen Behälters auf, der schachtartig in den Reaktor 1 eingelassen ist und dessen Öffnung mit dem Deckel 2 druckdicht und flüssigkeitsdicht verschlossen ist.

Die Reaktionskammer 3 ist mit einem Temperierelement 21 ummantelt, mit dem die Reaktionskammer 3 auf die für einen Präparationsschritt optimale Reaktionstemperatur aufgeheizt oder abgekühlt wird.

In der Reaktionskammer 3 befinden sich mehrere übereinander gestapelte, mit Frischgewebeschnitten 8 beladene Probenträger 6, die direkt aufeinander aufliegen, so dass die Bodenplatte 9 des jeweils obenliegenden Probenträgers 6 in den darunterliegenden Probenträger 6 eingreift und diesen dadurch abdeckt.

Die Probenträger 6 sind passförmig zum kreisförmigen Querschnitt der Reaktionskammer 3 ausgebildet. Zwischen Probenträgerstapel und Reaktionskammerinnenwand ist ein geringer Abstand in Form eines schmalen ringförmigen Spaltes vorhanden, der eine wandnahe Zirkulation der Präparationslösung innerhalb der Reaktionskammer 3 und zwischen den Probenträgern 6 ermöglicht.

Die in einem Probenträger 6 eingelegten zwei Frischgewebeschnitte 8 liegen jeweils auf einem netzartigen Gewebe 7 auf, das eine fluidal durchströmbare Struktur aufweist. Zwischen der Bodenplatte 9 und dem untersten netzartigen Gewebe 7 befindet sich ein Abstandshalter 19 mit einer ebenfalls von Fluiden durchströmbaren netzartigen Struktur.

In der der Öffnung gegenüberliegenden Wandung (Boden) der Reaktionskammer 3 ist zentrisch, eine Zulaufleitung 4 eingerichtet, über die die Reaktionskammer 3 mit einer Präparationslösung befüllt wird. Die Zulaufleitung 4 ist auch für das Ablassen der Präparationslösung aus der Reaktionskammer 3 hergerichtet. Zum Ablassen der Präparationslösung wird die Pumprichtung der Förderpumpe 13 umgekehrt und die Präparationslösung in einen Auffangbehälter (nicht dargestellt) gepumpt.

Im Deckel 2 der Reaktionskammer 3 ist eine Ablaufleitung 5 eingerichtet, über die die Reaktionskammer 3 beim Befüllen mit einer Präparationsleitung entlüftet wird. Die Ablaufleitung 5 weist ein Absperrventil 25 auf, das geschlossen wird, sobald die Präparationslösung luftblasenfrei über die Ablaufleitung 5 aus der Reaktionskammer austritt. Nach Beendigung eines Präparationsschrittes wird zum Ablassen der Präparationslösung die Ablaufleitung 5 die Reaktionskammer 3 zur Verhinderung eines Unterdrucks in der Reaktionskammer der Belüftung wieder geöffnet.

Seitlich am Reaktor 1 sind drei aus der Reaktionskammer 3 herausführende Zirkulationsleitung 16.1, 16.2 und 16.3 eingerichtet, die mit der Zulaufleitung 4 verbunden sind, die in die Reaktionskammer 3 hinein führt. Während der Durchführung eines Präparationsschrittes wird die Präparationslösung über die Zirkulationsleitungen 16.1, 16.2 und 16.3 und die Zulaufleitung 4 zurück in die Reaktionskammer 3 geführt.

Die zirkuläre Förderung der Präparationslösung erfolgt mit der in der Zulaufleitung 4 befindlichen Förderpumpe 13, die gleichzeitig der Erzeugung der Fluidströmung sowie des Überdrucks in der Reaktionskammer 3 dient.

Die Zirkulationsleitungen 16.1, 16.2 und 16.3 sind über die Länge der Reaktionskammer 3 gleichmäßig zueinander beabstandet angeordnet. In jeder Zirkulationsleitung 16.1, 16.2 und 16.3 ist ein Durchflussregler 17.1, 17.2 und 17.3 eingerichtet, mit dem entweder die Zirkulationsleitung 16.1, 16.2 und 16.3 geöffnet oder verschlossen oder die Größe des durch eine Zirkulationsleitung 16.1, 16.2 und 16.3 abfließenden Volumenstroms eingestellt werden kann.

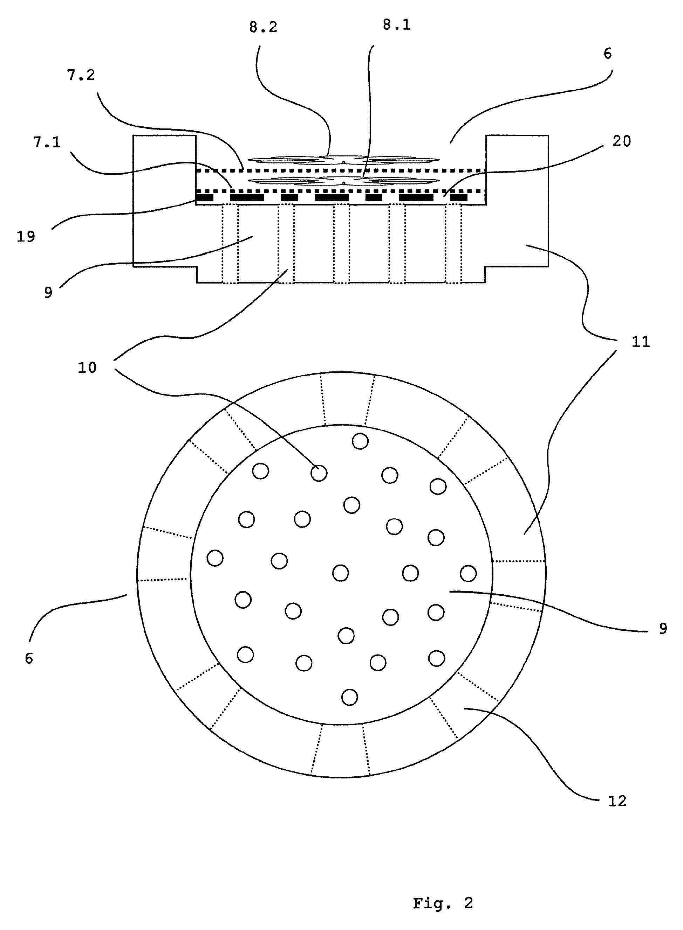

Die Figur 2 zeigt eine Querschnittsansicht und Aufsicht eines Probenträgers 6. Der Probenträger 6 weist eine im Wesentlichen zylindrische Grundform mit einer zylindrischen Vertiefung (Mulde) zur Aufnahme der Frischgewebeschnitte 8 auf. In der Bodenplatte 9 des Probenträgers 6 sind Durchgangsöffnungen 10 eingerichtet, die als zylindrische Bohrungen ausgestaltet und senkrecht durch die Bodenplatte 9 geführt sind. Durch die Seitenwandung 11 des Probenträgers 6 führen Durchgangskanäle 12 von der Außenseite des Probenträgers 6 bis in den zylinderförmigen Aufnahmebereich des Probenträgers 6, welche radial (sternförmig) zueinander ausgerichtet sind.

Zur Optimierung der Fluidströmung durch die in der Bodenplatte 9 eingerichteten Durchgangsöffnungen 10 in Richtung der im Probenträger 6 befindlichen Frischgewebeschnitte 8.1 und 8.2 ist zwischen der Bodenplatte 9 des Probenträgers 6 und dem direkt darüber liegenden netzartigen Gewebe 7.1, auf dem der erste Frischgewebeschnitt 8.1 aufgebracht ist, ein Abstandshalter 19 mit Durchströmöffnungen 20 eingelegt.

Der Abstandshalter 19 besteht aus einem Gewebe mit einer ebenfalls netzartigen Struktur, dessen Durchgangsöffnungen 20 eine größere Maschenweite als die Maschen des netzartigen Gewebes 7.1 oder 7.2 besitzen.

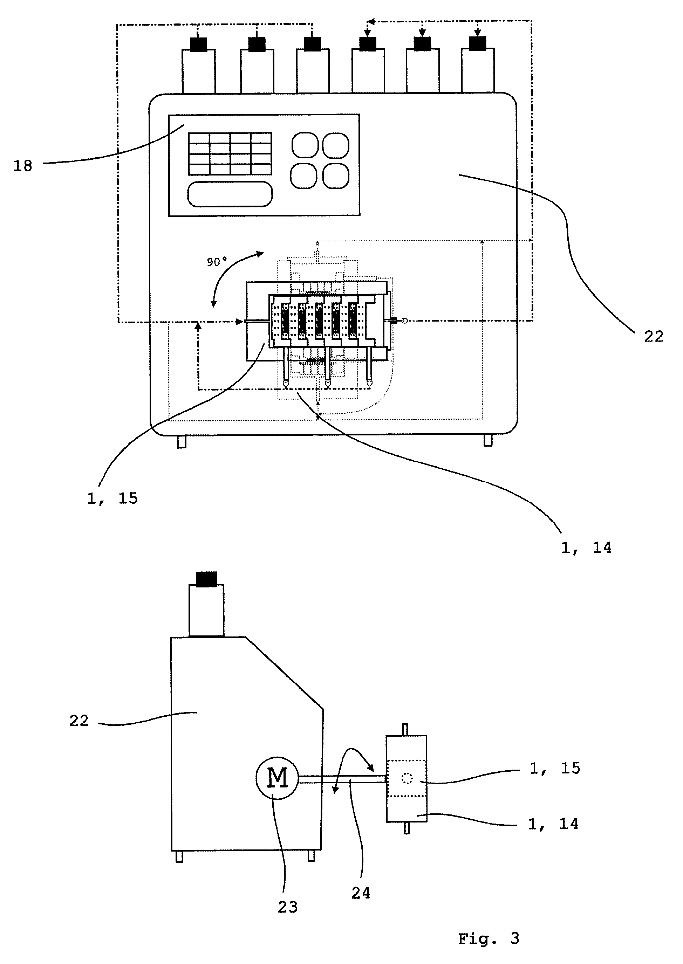

In der Figur 3 sind eine Frontansicht und eine Seitenansicht einer Ausführungsform der erfindungsgemäßen Vorrichtung dargestellt. Die Vorrichtung umfasst ein Gehäuse 22, in dem die Steuereinheit 18 zur Automatisierung eines mit der Vorrichtung durchführbaren Präparationsverfahrens untergebracht ist. In der Steuereinheit 18 sind die erforderlichen Programme für die automatisierte Durchführung von Präparationsverfahren gespeichert. Zur Bedienung der erfindungsgemäßen Vorrichtung ist die Steuereinheit 18 mit einem Display sowie Bedienungselementen ausgestattet, über die u.a. die Programme (Durchführungsprotokolle) für die Durchführung von Präparationsverfahren aufgerufen und kontrolliert werden können.

Aus Übersichtsgründen sind in der Figur 3 die Signalleitungen, die die Steuereinheit 18 mit dem Reaktor 1 und den weiteren vorrichtungsseitigen Bauteilen verbindet, nicht dargestellt. Die wesentlichen Flüssigkeitsleitungen sind in Form eines gestrichelten Fließbildes wiedergegeben.

Desweiteren ist im Gehäuse 22 ein Motor 23 eingerichtet, mit dem der Reaktor 1 über eine Drehachse 24 verbunden ist und mit dem die Schwenkbewegung von 90° von einer vertikalen Ausrichtung 14 in eine horizontale Ausrichtung 15 und zurück ausgeführt wird.

Für das Bestücken der Reaktionskammer mit Probenträgern sowie bei jedem Verfahrensschritt, bei dem eine Präparationslösung aus dessen Vorratsbehälter in die Reaktionskammer luftblasenfrei eingefüllt oder aus der Reaktionskammer abgelassen wird, ist der Reaktor 1 vertikal ausgerichtet. Diese Position ist mit dem Bezugszeichen 1, 14 gekennzeichnet. Sobald die Reaktionskammer luftblasenfrei gefüllt ist, wird der Reaktor 1 um 90° nach rechts verschwenkt, so dass die darin eingerichtete Reaktionskammer in eine horizontale Ausrichtung verbracht wird. Diese Position ist mit dem Bezugszeichen 1, 15 gekennzeichnet.

Nach Erreichen der horizontalen Ausrichtung 1, 15 wird der durchzuführende Präparationsschritt gestartet. Während des Präparationsschritts wird die Präparationslösung zirkulierend unter Ausbildung von turbulenten Strömungsbedingungen durch die Reaktionskammer geführt, wobei die Präparationslösung aus der Reaktionskammer alternierend über die Zirkulationsleitungen herausgeführt und über die Zuleitung wieder in die Reaktionskammer rückgeführt wird. Während des Präparationsschritts ist die Ablaufleitung im Deckel der Reaktionskammer geschlossen. Zur Steigerung der Effektivität der Präparation wird während der Durchführung eines Präparationsschrittes in der Reaktionskammer einen Überdruck eingestellt, der je nach Art und Dicke des Frischgewebeschnittes zwischen 0,1 bar und 1 bar liegen kann.

Nach Beendigung des Präparationsschrittes wird der Reaktor wieder zurück in die vertikale Ausrichtung 1, 14 gefahren, die verwendete Präparationslösung abgelassen, ggfs. die Reaktionskammer mit einem neutralen Puffer gespült und die zur Durchführung des nächsten Präparationsschrittes erforderliche Präparationslösung von unten aufsteigend in die Reaktionskammer gepumpt. Anschließend wird der Reaktor zur Durchführung des nächsten Präparationsschrittes wieder in die horizontale Ausrichtung 1, 15 gekippt und der nächste Präparationsschritt gestartet.

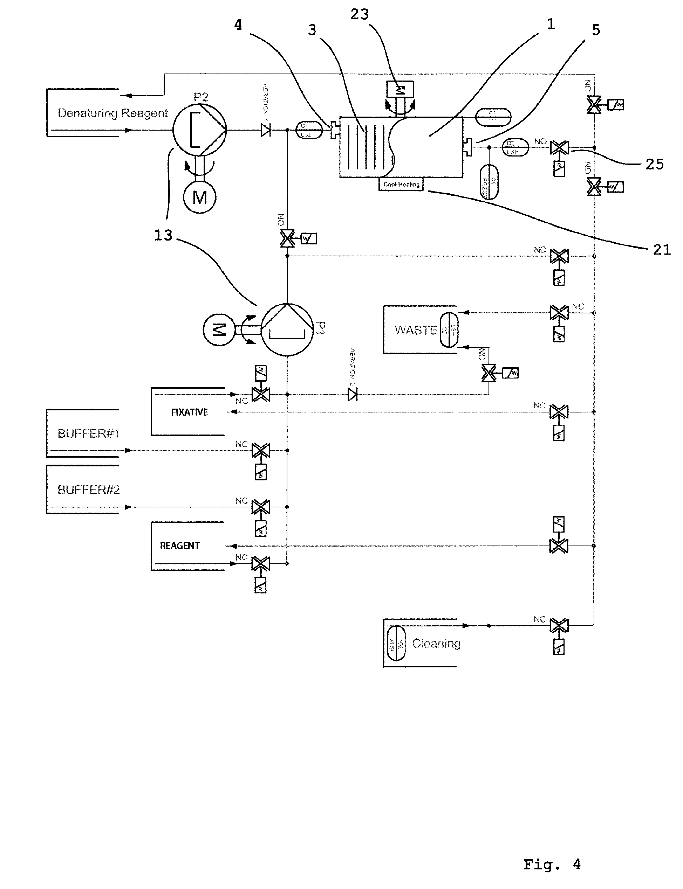

Die Figur 4 zeigt ein Fließbild einer Ausführungsform der erfindungsgemäßen Vorrichtung, bei der die Präparationslösungen mittels zweier umkehrbarer Pumpen 13 (P1, P2) durch die Reaktionskammer 3 gepumpt werden.

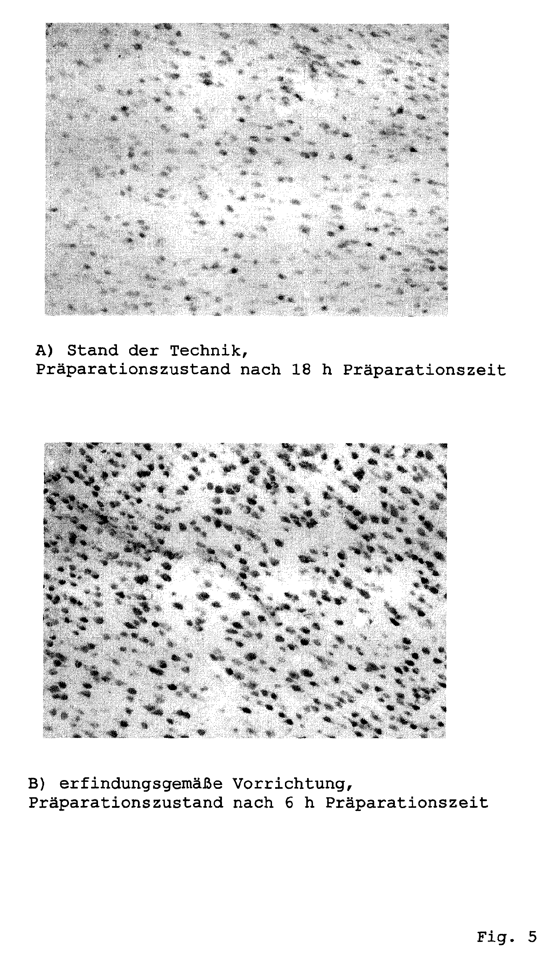

In der Figur 5 sind zwei Aufnahmen von präparierten Gewebeschnitten von Rattenhirn nach einem Schlaganfall wiedergegeben.

Die Abbildung A) zeigt den Präparationszustand eines Rattenhirngewebeschnitts nach 18 Stunden Präparation mit einem laborüblichen Einfärbeverfahren.

Die Abbildung B) gibt im Vergleich den Präparationszustand eines Rattenhirngewebeschnitts aus Frischgewebe nach 6 Stunden Präparationszeit wieder, bei dem das gleiche Einfärbeverfahren wie in Abbildung A), allerdings mit der erfindungsgemäßen Vorrichtung und unter den erfindungsgemäßen Verfahrensbedingungen durchgeführt wurde.

Wie das Präparationsbild gemäß Abbildung B) deutlich zeigt, kann mit der erfindungsgemäßen Vorrichtung bzw. Verfahren ein gleichmäßigeres und intensiveres Präparationsergebnis und das in einer wesentlich kürzeren Zeit von 6 Stunden erzielt werden.

## Patentansprüche

1. Vorrichtung zur gleichzeitigen Präparation einer Mehrzahl von Frischgewebeschnitten aufweisend
einen Reaktor (1) mit einer mit einem Deckel (2) druckdicht verschließbaren Reaktionskammer (3) und mindestens einer Zulaufleitung (4) und mindestens einer Ablaufleitung (5) für Präparationslösungen, wobei die Reaktionskammer (3) luftblasenfrei mit einer Präparationslösung befüllbar ist,
eine Mehrzahl stapelbarer Probenträger (6), die in die Reaktionskammer (3) passförmig einsetzbar sind, wobei jeder Probenträger (6) für die Aufnahme mindestens eines jeweils auf einem netzartigen Gewebe (7) aufgetragenen Frischgewebeschnittes (8) hergerichtet ist und
wobei jeder Probenträger (6) eine Bodenplatte (9) mit Durchgangsöffnungen (10) sowie eine die Bodenplatte (9) überragende Seitenwandung (11) mit Durchgangskanälen (12) für den Durchtritt der Präparationslösungen aufweist, sowie eine Pumpe (13) zur Erzeugung einer Fluidströmung in der Reaktionskammer (3),
**dadurch gekennzeichnet, dass**
der Reaktor (1) um 90° schwenkbar gelagert ist, so dass die Reaktionskammer (3) von einer vertikalen Ausrichtung (14) in eine horizontale Ausrichtung (15) und umgekehrt verschwenkbar ist.

2. Vorrichtung nach Anspruch 1, **dadurch gekennzeichnet, dass**
eine Mittel zur Erzeugung eines Überdrucks in der Reaktionskammer eingerichtet ist.

3. Vorrichtung nach Anspruch 2, **dadurch gekennzeichnet, dass**
der Reaktor (1) ein Druckbehälter ist.

4. Vorrichtung nach einem der Ansprüche 1 bis 3, **dadurch gekennzeichnet, dass**
seitlich am Reaktor (1) mindestens eine aus der Reaktionskammer (3) herausführende Zirkulationsleitung (16) eingerichtet ist, die mit der Zulaufleitung (4) verbunden ist.

5. Vorrichtung nach Anspruch 4, **dadurch gekennzeichnet, dass**
bei Einrichtung mehrerer Zirkulationsleitungen (16.1, 16.2, 16.3) die Zirkulationsleitungen (16.1, 16.2, 16.3) über die Länge der Reaktionskammer (3) zueinander gleichmäßig beabstandet eingerichtet sind.

6. Vorrichtung nach Anspruch 4 oder 5, **dadurch gekennzeichnet, dass**
in einer Zirkulationsleitung (16) ein Durchflussregler eingerichtet ist.

7. Vorrichtung nach einem der Ansprüche 1 bis 6, **dadurch gekennzeichnet, dass**
eine Steuereinheit (18) zur Automatisierung eines mit der Vorrichtung durchführbaren Präparationsverfahrens eingerichtet ist, in der ein oder mehrere Programme für Präparationsverfahren abrufbar gespeichert sind.

8. Vorrichtung nach einem der Ansprüche 1 bis 7, **dadurch gekennzeichnet, dass**
ein Probenträger (6) für die Aufnahme mehrerer auf einem netzartigen Gewebe (7.1, 7.2) aufgebrachter Frischgewebeschnitte (8.1, 8.2) hergerichtet ist, wobei die jeweils auf einem netzartigen Gewebe (7.1, 7.2) aufgebrachten Frischgewebeschnitte (8.1, 8.2) übereinander geschichtet in den Probenträger (6) einsetzbar sind.

9. Vorrichtung nach einem der Ansprüche 1 bis 8, **dadurch gekennzeichnet, dass**
zwischen der Bodenplatte (9) eines Probenträgers (6) und dem darüber liegenden netzartigen Gewebe (7), auf dem ein Frischgewebeschnitt (8) aufgebracht ist, ein Abstandshalter (19) mit Durchströmöffnungen (20) eingerichtet ist.

10. Verfahren zur gleichzeitigen Präparation einer Mehrzahl von Frischgewebeschnitten mit einer Vorrichtung nach einem der Ansprüche 1 bis 9 mit mindestens den Verfahrensschritten
- luftblasenfreies Befüllen der mit gestapelten Probenträgern (6) bestückten Reaktionskammer (3) mit einer Präparationslösung,
- Durchführen eines Präparationsschrittes eines Präparationsverfahrens,
- Entfernen der Präparationslösung aus der Reaktionskammer (3),
**dadurch gekennzeichnet, dass**
die mit gestapelten Probenträger (6) bestückte Reaktionskammer (3) zum Befüllen der Reaktionskammer (3) mit einer Präparationslösung sowie zur Entfernung der Präparationslösung aus der Reaktionskammer (3) in eine vertikale Ausrichtung und für die Durchführung eines Präparationsschrittes in eine horizontale Ausrichtung verbracht wird.

11. Verfahren nach Anspruch 10, **dadurch gekennzeichnet, dass**
während der Durchführung eines Präparationsschrittes die Präparationslösung zirkulierend durch die Reaktionskammer (3) geführt wird, wobei die Zirkulation und Rückführung der der Präparationslösung in die Reaktionskammer (3) über mindestens eine Zirkulationsleitung (16) erfolgt.

12. Verfahren nach Anspruch 11, **dadurch gekennzeichnet, dass**
bei Einrichtung mehrerer Zirkulationsleitungen (16.1, 16.2, 16.3) während der Zirkulation der Präparationslösung die Zirkulationsleitungen (16.1, 16.2, 16.3) alternierend geschlossen und geöffnet werden, wobei mindestens eine der Zirkulationsleitungen (16.1, 16.2, 16.3)geöffnet ist während die weiteren Zirkulationsleitungen (16.1, 16.2, 16.3)geschlossen sind.

13. Verfahren nach einem der Ansprüche 10 bis 12, **dadurch gekennzeichnet, dass**
ein Präparationsschritt unter Überdruckbedingungen in der Reaktionskammer (3) durchgeführt wird.

14. Verfahren nach Anspruch 13, **dadurch gekennzeichnet, dass**
der Überdruck 0,1 bar bis 1 bar beträgt.
